# EUROPÄISCHE PATENTSCHRIFT

(11) **EP 0 464 700 B1**
(45) Veröffentlichungstag und Bekanntmachung des Hinweises auf die Patenterteilung: **31.08.1994**
(21) Anmeldenummer: 91110728.2
(22) Anmeldetag: 28.06.1991
(51) Int. Cl.: B65G 1/02

(54) **Lagerschiene**
Storage rail
Rail de stockage

(30) Priorität: 29.06.1990 DE 4020864
(43) Veröffentlichungstag der Anmeldung: 08.01.1992
(73) Patentinhaber: Croon & Lucke Maschinenfabrik GmbH, D-88512 Mengen (DE)
(72) Erfinder: Walker, Erwin, W-7969 Hohentengen (DE)
(74) Vertreter: Weiss, Peter, Dr. rer.nat.

(56) Entgegenhaltungen:
- EP-A- 0 215 328
- DE-A- 3 807 663
- DE-A- 3 811 310

## Beschreibung

Die Erfindung betrifft eine horizontal angeordnete Lagerschiene mit an horizontalen, quer zur Lagerschiene angeordneten Bolzen drehbar gelagerten Klinken zum beabstandeten Festlegen von Lagergut, wie geformten Blechen, Kunststoffteilen od. dgl., in einem Lagergestell, wie beispielsweise Palette od. dgl., wobei beim Einbringen des Lagergutes in das Lagergestell eine sich in einer Bereitschaftsstellung befindlichen Klinke in eine Arbeitsstellung verschwenkbar ist, während gleichzeitig eine benachbarte Klinke durch einen an der ersten Klinke befindlichen Steuerarm aus einer Ruhelage unterhalb einer Oberkante der Lagerschiene in Bereitschaftsstellung geschwenkt wird.

Aus der DE-A- 38 11 310 ist beispielsweise eine Stapelsäule zum Stapeln von Lagergütern annähernd gleicher Form und Größe in gegenseitigen Abständen bekannt, wobei übereinander angeordnete Klinkenheber vorgesehen sind.

Beim Auflegen eines Lagergutes auf einen in Bereitschaftsstellung befindlichen Klinkenheber gelangt dieser in eine Arbeitsstellung. Gleichzeitig wird ein darüber angeordneter Klinkenheber durch einen Steuerarm aus seiner Ruhestellung in seine Bereitschaftsstellung geschwenkt.

Die dort gezeigte Anordnung ist an senkrechten Stapelsäulen anwendbar, jedoch nicht für horizontal angeordnete Lagerschienen geeignet, welche der Festlegung von beispielsweise senkrecht aufgerichteten Lagergütern, Blechen od. dgl. Formteilen dienen.

Horizontal angeordnete Lagerschienen sind dagegen aus der DE-A 38 07 663 bekannt, die eine Lagerschiene gemäß dem Oberbegriff des Anspruchs 1 offenbart. Hierbei sind drehbar an Bolzen entsprechende Klinkenhebel angeordnet, wobei jedoch diese Klinkenhebel über ein Gestänge miteinander verbunden sind. Diese Klinkenhebel weisen einends eine Drehachse auf, um die der Klinkenhebel dreht. Beim Verschwenken des Klinkenhebels aus seiner Ruhelage in die Bereitschaftsstellung und danach in die Arbeitsstellung beschreibt dieser Klinkenhebel eine Kurve, welche sich beim Beladen des Lagergestelles als sehr ungünstig erwiesen hat. Ferner wird die Festlegung des Lagergutes mittels eines Sicherungshebels bewirkt, der zusätzlich für seine entsprechende Bewegung einer eigenen Mimik bedarf.

Auch die Abhängigkeit der Bewegung der einzelnen Klinkenhebel von dem Gestänge hat sich als ungünstig erwiesen, da dieses Gestänge keine Sicherung des Klinkenhebels in seiner Arbeitsstellung aufweist. Insofern kann es leicht zu einem Vorfallen des Lagergutes kommen.

Der Erfinder hat sich zur Aufgabe gesetzt, eine Lagerschiene der o.g. Art zu entwickeln, welche eine sichere Festlegung des Lagergutes gewährleistet und beim Einfüllen des Lagergutes störungsfrei arbeitet.

Zur Lösung dieser Aufgabe führt, daß der Klinke ein Gewicht zugeordnet ist, welches die Klinke in Bereitschaftsstellung hält, während der Steuerarm der Klinke so an einer benachbarten Klinke anliegt, daß die erste Klinke nicht durch das Gewicht weiter in die Arbeitslage schwenkt.

Grundsätzlicher Gedanke der vorliegenden Erfindung ist die Anordnung des genannten Gewichtes, welches eine unabhängige Bewegung der einzelnen Klinken voneinander ermöglicht. Zusammen mit einem Anschlag besorgt das Gewicht die Halterung der Klinke in Bereitsschaftsstellung.

Obwohl es sicherlich denkbar ist und auch von der vorliegenden Erfindung umfaßt werden soll, daß das Gewicht selbst an der Klinke angeordnet ist, soll entsprechend der vorliegenden Erfindung das Gewicht Teil der Steuerklinke sein, welche neben der Klinke bevorzugt am gleichen Bolzen ebenfalls drehbar lagert. Hierdurch wird die Bewegung des Gewichtes von der Klinkenbewegung gelöst, so daß das Gewicht bei gleicher Drehbewegung der Klinke einen größeren Drehweg zurück legen kann und hierdurch sein Schwerpunkt besser zur Geltung kommt.

In einer bevorzugten Ausführungsform besteht die Klinke aus dem Haltearm, an dem das zu lagernde Gut anschlägt und dem Steuerarm, wobei beide etwa rechtwinklig zueinander angeordnet sind. Nahe dem Kreuzungspunkt von Steuerarm und Haltearm soll der Bolzen die Klinke durchdringen. Im Gegensatz zum Stand der Technik, wie er oben beschrieben ist, besitzt jetzt die Klinke keine Auflagefläche mehr, über welche das Lagergut bei der Kurvenbewegung der Klinke angehoben wurde. Das zu lagernde Gut kann auf der Lagerschiene entlanggleiten und hierbei die entsprechende Bewegung der Klinke von der Bereitstellung in die Arbeitsstellung durchführen.

Von der Klinke und hier insbesondere von dem Steuerarm soll ein Stift abragen, welcher zwischen zwei Zinken der Steuerklinke eingreift. Beim Anschlagen des Stiftes an die Zinken bewirkt dieser einerseits, daß die Steuerklinke bei der Drehbewegung der Klinke mitgenommen wird, und andererseits eine Begrenzung der Drehbewegung der Steuerklinke. Ferner ist im vorliegenden Ausführungsbeispiel noch an der Steuerklinke ein weiterer Zinken vorgesehen, der in Ruhelage der Klinke am nächstfolgenden Bolzen anschlägt. Hierdurch wird ebenfalls die Drehbewegung der Steuerklinke begrenzt. Denkbar ist, daß anstelle des zusätzlichen Zinkens derjenige Zinken in gleicher Weise Anwendung findet, über welchen die Steuerklinke in Zusammenwirken mit dem o.g. Stift in Drehbewegung versetzt wird.

Bevorzugt befindet sich das Gewicht oberhalb des Bolzens, wobei eine Verbindungslinie zwischen einem Mittelpunkt des Gewichtes und der Mittelachse des Bolzens mit einer Längsachse des Zinkens einen spitzen Winkel einschließt. Hierdurch wird gewährleistet, daß sich das Gewicht in Ruhestellung der Klinke, d.h., wenn der Zinken dem nachfolgenden Bolzen anliegt, einerseits des Bolzens befindet und so die Anlage des Zinkens an dem nachfolgenden Bolzen unterstützt. Wird nun die Klinke gedreht, durchfährt der o.g. Stift den Raum zwischen den beiden Zinken und schlägt nach kurzer Drehbewegung von unten her an dem einen Zinken an. Bei einer weiteren Drehbewegung nimmt der Stift die Steuerklinke mit, bis das Gewicht seinen Scheitelpunkt über den Bolzen überschritten hat. Danach fällt das Gewicht und dreht hierdurch die Steuerklinke unabhängig von einer Drehbewegung der Klinke weiter, bis der untere Zinken von unten her an den Stift anschlägt. Hierdurch ist das Gewicht relativ weit verlagert, so daß es eine höhere Druckwirkung auf die Klinke ausübt, die hierdurch in Bereitschaftsstellung gehalten wird.

In Bereitsschaftsstellung schlägt der Steuerarm der Klinke an einem Stift einer nachfolgenden Klinke an, wobei es sich als günstig erwiesen hat, wenn es sich bei dem nachfolgenden Stift um den den Steuerarm durchdringenden Stift handelt, der andererseits die Drehbewegung der Steuerklinke bewirkt. Hierdurch wird, muß aber nicht, ein zusätzlicher Anschlagstift eingespart.

Wird die Klinke nunmehr weitergedreht, so nimmt der Steuerarm über den Stift, an dem er anschlägt, die nachfolgende Klinke mit, so daß diese in Bereitschaftsstellung geschwenkt wird. In Ruhestellung der vorangegangenen Klinke befindet sich die nachfolgende Klinke am Ende der Bewegung in Bereitschaftsstellung. Dabei wird die Drehbewegung der sich in Arbeitsstellung befindlichen Klinke dadurch gestoppt, daß der Steuerarm dieser Klinke von unten her an den nachfolgenden Bolzen anschlägt.

Ferner ist an der nachfolgenden Klinke eine Steuerkante ausgebildet, an der beim Schwenken dieser Klinke in ihre Arbeitsstellung ein weiterer Stift der vorangegangenen Klinke, welche sich bereits schon vorher in Arbeitsstellung befindet, entlanggleitet, wodurch diese vorangegangene Klinke nunmehr endgültig gesperrt wird.

Diese erfindungsgemäße Anordnung ermöglicht einen reibungslosen Ablauf des Einlagerns von Lagergut in ein entsprechendes Lagergestell, welches mit derartigen Schienen belegt ist. Selbstverständlich können die Schienen auch ohne Lagergestelle, wie beispielsweise Paletten, Anwendung finden.

Bevorzugt besteht eine Lagerschiene aus zwei parallel zueinander verlaufenden Leisten, zwischen denen im gleichen Abstand die Bolzen mit den Klinken angeordnet sind. Im Einzelfall kann jedoch auch eine Leiste genügen, von der die entsprechenden Bolzen abragen. Ferner dürfte es sich aus technischen Gründen als ratsam erweisen, wenn die Klinke an aufeinanderfolgenden Bolzen seitlich zueinander versetzt angeordnet sind. Aus den gleichen Gründen dürften dann auch die Steuerklinken von aufeinanderfolgenden Klinken sich jeweils auf gegenüberliegenden Seiten dieser Klinken befinden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Figur 1: eine perspektivische Darstellung eines Lagergestelles mit erfindungsgemäßen Lagerschienen in Gebrauchslage;
- Figur 2: eine Seitenansicht eines aufgebrochenen Ausschnittes einer erfindungsgemäßen Lagerschiene mit einer Klinke in Bereitschaftsstellung und zwei Klinken in Ruhestellung;
- Figur 3: eine Seitenansicht eines aufgebrochenen Ausschnittes einer erfindungsgemäßen Lagerschiene mit einer Klinke in Arbeitslage, einer Klinke in Bereitschaftsstellung und einer Klinke in Ruhelage.
- Figur 4: einen Längsschnitt durch eine Klinke entlang Linie IV-IV in Figur 2;
- Figur 5: eine Draufsicht auf einen Ausschnitt einer erfindungsgemäßen Lagerschiene.

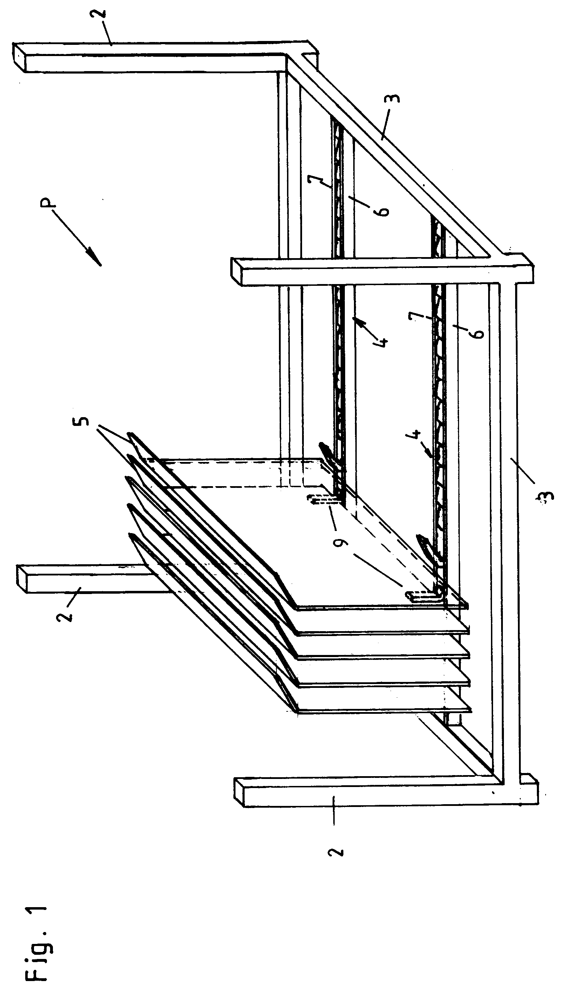

Eine erfindungsgemäße Palette P od. dgl. Lagergestell besteht gemäß Figur 1 im wesentlichen aus einem Rahmengestell 1 mit Seitenpfosten 2, welche über Bodenstreben 3 miteinander verbunden sind. Ferner sind zwischen zwei gegenüberliegenden Bodenstreben 3 Lager schienen 4 angeordnet. Auf diesen Lagerschienen 4 sitzen bereits bearbeitete Bleche 5 eines Lagergutes.

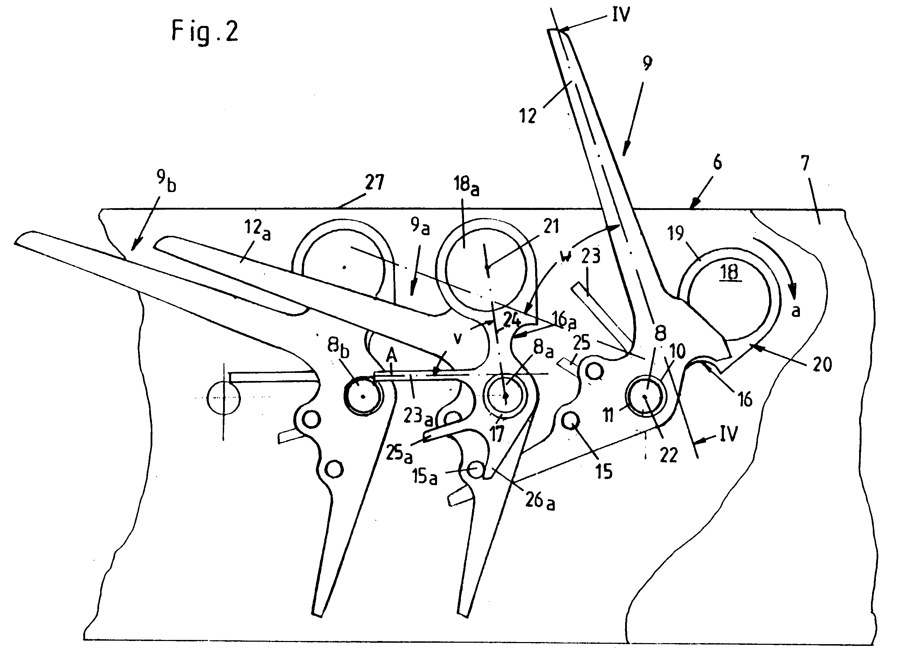

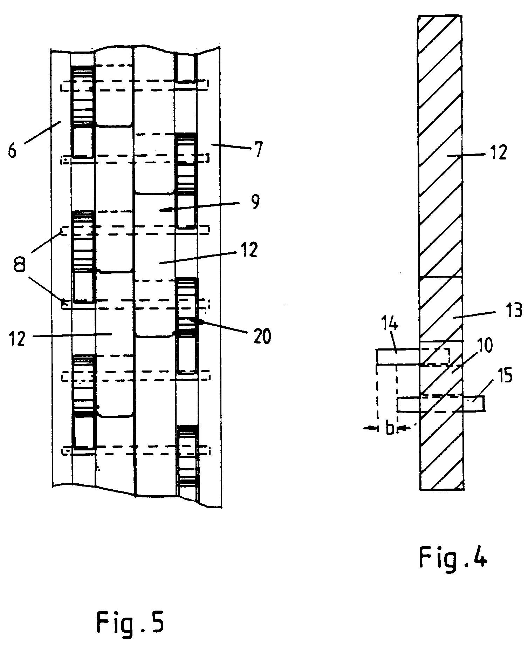

Die Lagerschiene 4 weist zwei Leisten 6 und 7 in Form von langgestreckten Rechteckstreifen auf, welche voneinander beabstandet parallel zueinander verlaufen. Die Leisten 6 und 7 sind an den Bodenstreben 3 der Palette P vorzugsweise durch Schweißungen befestigt. Zwischen und quer zu den Leisten 6 und 7 sind in festgelegten Abständen Bolzen 8 angeordnet, auf welchen Klinken 9 drehbar lagern. Hierzu durchdringen die Bolzen 8 jeweils eine Bohrung 10 in der Klinke 9, wobei in die Bohrung 10 eine Kunststoffhülse 11 zur Aufnahme des Bolzens 8 eingearbeitet sein kann. Jede Klinke 9 weist gemäß Figur 2 einen Haltearm 12 und einen Steuerarm 13 auf, wobei Haltearm 12 und Steuerarm 13 in etwa rechtwinklig zueinander verlaufen. Die Bohrung 10 zur Aufnahme des Bolzens 8 ist nahe am Schnittpunkt von Haltearm 12 und Steuerarm 13 vorgesehen. Der Steuerarm 13 ist von kreiszylindrischen Stiften 14 und 15 durchdrungen, welche in entsprechenden Bohrungen mit Paßsitz festliegen. Während jedoch der Stift 14, wie in Figur 4 gezeigt, nur einseitig von der Klinke 9 absteht, ragt der Stift 15 nach beiden Seiten vom Steuerarm 13 ab. Dabei überragt der Stift 14 auf der einen Seite im gezeigten Ausführungsbeispiel den Stift 15 um eine Länge b.

In Figur 2 befindet sich die Klinke 9 in Bereitschaftsstellung, während sich die Klinken 9a und 9b in Ruhestellung zeigen. Der Klinke 9 ist dabei eine Steuerklinke 16 zugeordnet, welche ebenfalls drehbar bzw. schwenkbar auf dem Bolzen 8 lagert. Hierzu weist die Steuerklinke 16 eine vom Bolzen 8 durchdrungene Bohrung 17 auf.

Die Steuerklinke 16 weist eine spezielle Ausformung auf, welche ihre später beschriebene Funktionsweise bestimmt. Oberhalb der Bohrung 17 in Ruhestellung der Klinke 9a oder 9b befindet sich ein in eine Aufnahme 19 eines Hebelstückes 20 eingesetztes Gewicht 18. Der Mittelpunkt 21 dieses scheibenförmigen Gewichtes 18 ist der Mittelachse 22 des Bolzens 8a bzw. 8b vorgelagert. Hierdurch wird bewirkt, daß die Steuerklinke 16 nicht in Drehrichtung a fällt. Sie wird in dieser Lage gehalten und zwar durch einen Zinken 23a, welcher an dem auf den Bolzen 8a folgenden nächsten Bolzen 8b anstößt und dabei etwa rechtwinklig von der Steuerklinke 16 abragt. Dementsprechend schließt eine Längsachse A des Zinkens 23a mit einer Verbindungslinie 24 zwischen Mittelpunkt 21 und Mittelachse 22 einen spitzen Winkel v ein.

Unterhalb des Zinkens 23a sind zwei weitere Zinken 25a und 26a vorgesehen, welche mit dem Stift 15a zusammenwirken. In der in Figur 2 gezeigten Ruhelage schlägt der Stift 15a an dem unteren Zinken 26a an und hält so die Klinke 9a in Ruhelage, da ein Drehen der Steuerklinke 16 durch den Anschlag des Zinkens 23a an den Bolzen 8b verhindert ist. Wird die Klinke 9a in Richtung a um den Bolzen 8a gedreht, so löst sich der Stift 15a von dem Zinken 26a, durchfährt einen Raum zwischen Zinken 26a und 25a und trifft dann auf den Zinken 25a. Nunmehr wird bei einer weiteren Drehung in Richtung a auch die Steuerklinke 16a mitgedreht, bis der Mittelpunkt 21 seinen Scheitelpunkt über der Mittelachse 22 überschreitet und das Gewicht 18 aufgrund seiner Schwerkraft von alleine ein Stück in Richtung a fällt. Dieser Fall wird dann wieder von einem Anschlag des Zinkens 26a an den Stift 15a aufgefangen.

Wie insbesondere aus Figur 5 hervorgeht, sind die einzelnen hintereinanderliegenden Klinken 9 abwechselnd seitlich versetzt zueinander und aneinander vorbeigleitend angeordnet. Die ihnen zugeordneten Steuerklinken 16 lagern jeweils zwischen den entsprechenden Klinken 9 und einer der Leisten 6 oder 7.

Die erfindungsgemäße Anordnung funktioniert wie folgt:
Für eine Bereitschaftsstellung ist die erste Klinke 9 um den Bolzen 8 in Drehrichtung a um einen Winkel w geschwenkt. Dabei untergreift der Stift 15 den Zinken 25 der Steuerklinke 16 und bewirkt, daß die Steuerklinke 16 ihrerseits um den Bolzen 8 in Richtung a geschwenkt ist. Nach Überschreiten des Scheitelpunktes des Gewichtes 18 fällt das Gewicht in Drehrichtung a, bis der Zinken 26 an den Stift 15 anschlägt. Eine weitere Drehung der Klinke 9 wird dadurch vermieden, daß der Steuerarm 13 an den Stift 15a der nachfolgenden Klinke 9a anschlägt.

Das Gewicht 18 ist so ausgelegt, daß es in dieser Lage aufgrund seiner Schwerkraft ein Drehmoment erzeugt, welches so groß ist, daß es die Klinke 9 in Bereitschaftsstellung hält, ohne die Klinke 9a in Dreh- bzw. Schwenkbewegung zu versetzen. Durch den Anschlag des Steuerarms 13 am Stift 15a ist die Klinke 9 positioniert.

Die Klinken 9a und 9b befinden sich noch unterhalb einer Oberkante 27 der Lagerschiene 4. Der Stift 15a verhindert ein weiteres Zurückfallen der Klinke 9, der Bolzen 8b, auf welchem der Zinken 23a aufliegt, verhindert ein Vorfallen des Gewichtes 18a.

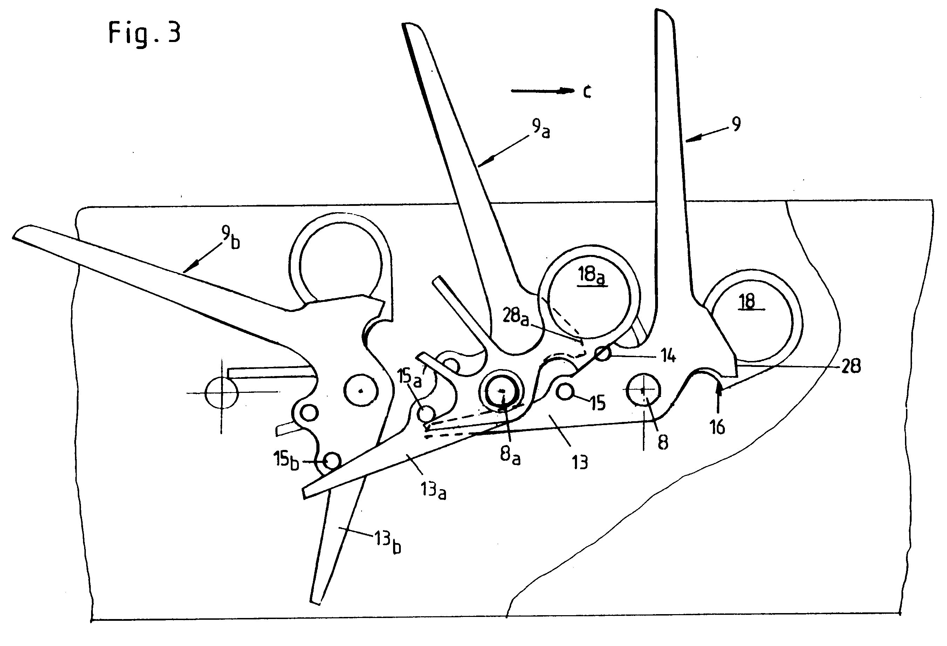

Wird gemäß Figur 3 ein Blech 5 zur Lagerung in Richtung c über die Lagerschiene 4 gegen den Haltearm 12 der Klinke 9 geschoben, dreht sich dieser weiter um den Bolzen 8 in Richtung a, wobei der Steuerarm 13 über den Stift 15a die Klinke 9a mitnimmt. Hierdurch wird die Klinke 9a in eine Bereitschaftsstellung verschwenkt.

Gleichzeitig untergreift bei diesem Verschwenken der zur Steuerklinke 16a hin ragende Teil des Stiftes 15a den Zinken 25a der Steuerklinke 16a und bewirkt deren Mitdrehen. Das Gewicht 18 der Steuerklinke 16a wird über seinen Scheitelpunkt gedreht und fällt auch in Richtung a. Diese Drehbewegung wird gestoppt durch das Anschlagen des Zinkens 26a an dem Stift 15a einerseits und des Steuerarmes 13a der Klinke 9a am Stift 15b der Klinke 9b andererseits. Die Klinke 9a befindet sich nun in Bereitschaftsstellung, die Klinke 9b lagert noch unter der Oberkante 27 der Lagerschiene 4.

Wie insbesondere in Figur 3 gestrichelt dargestellt, untergreift der Steuerarm 13 der Klinke 9 in seiner Arbeitsstellung den Bolzen 8a. Somit ist durch den Bolzen 8a die Arbeitsstellung der betreffenden Klinke 9 definiert.

Wird die nächste Klinke 9a in Arbeitsstellung gebracht, so gleitet eine Steuerkante 28a an dem bereits festliegenden Stift 14 der Klinke 9 entlang. Hierdurch wird die Klinke 9 endgültig festgelegt und kann nun auch nicht mehr entgegen Drehrichtung a bewegt werden.

Bei der beschriebenen Lagerschiene 4 sind alle jeweils in zwei Reihen versetzt zueinander angeordnete Klinken 9 untereinander identisch ausgebildet. Nur die Stifte 14 ragen jeweils in die der entsprechenden Steuerklinke 16 entgegengesetzte Richtung von der Klinke 9 ab.

Die Haltearme 12 der Klinken 9 sind in ihrer Länge so ausgebildet, daß zwischen zwei Klinken 9 und 9a ein Lagergut, beispielsweise Bleche 5, Platten od. dgl., senkrecht lagernd gehalten werden kann. Die Abstände der einzelnen Klinken 9 untereinander sind der Dicke des jeweiligen Lagergutes entsprechend gewählt. Für eine schonende Lagerung der Lagergüter oder zum Ausfüllen von zu großen Abständen zwischen den einzelnen Klinken und dem Lagergut können die Klinken 9 mit einem entsprechend dicken elastischen Material, wie beispielsweise Schaumstoff, Filz od. dgl., überzogen sein.

Der Vorteil einer Stapelschiene mit versetzt zueinander angeordneten Klinken 9 besteht darin, daß die Abstände der Klinken 9 sehr eng gehalten werden können.

Eine mit der soweit beschriebenen Lagerschiene 4 ausgerüsteten Palette P funktioniert insgesamt wie folgt:
Gemäß Figur 1 trifft ein in vertikaler Lage zu stapelndes Blech 5 auf die in Figur 1 am weitesten links liegenden Klinken 9. Diese Klinken 9 befinden sich zu diesem Zeitpunkt in Bereitschaftsstellung. Durch das Anschlagen des Bleches 5 werden die Klinken 9 zwangsläufig in Arbeitsstellung verschwenkt. Durch das Absetzen des Bleches 5 an der ersten Klinke 9 und durch die hierdurch bewirkte Überführung der Klinke in ihre Arbeitsstellung gelangt die benachbarte Klinke 9a in Bereitschaftsstellung, so daß sie jetzt ebenfalls durch ein entsprechend eingeschobenes Blech 5 in Arbeitsstellung verschwenkt werden kann. Dadurch gelangt wiederum die nächstfolgende Klinke 9b in Bereitschaftsstellung.

Bleche 5 können solange hintereinander gestapelt werden, bis alle Klinken 9 besetzt sind. Ist dies der Fall, wird die letzte Klinke durch eine nicht näher beschriebene Sicherungsklinke festgelegt.

Beim Entladen einer entsprechenden Palette P wird in umgekehrter Weise vorgegangen. Zunächst wird das am weitesten rechts gelegene Blech 5 entnommen, wodurch die nachfolgende Klinke 9 gelöst und in Bereitschaftsstellung verschwenkt wird. Dabei überfährt die Steuerkante 28 den Stift 14 der nachfolgenden Klinke 9. Das nachfolgende Blech 5 kann jetzt über die sich in Bereitschaftsstellung befindliche Klinke 9 gezogen werden, wobei diese Klinke um den Bolzen 8 weiter geschwenkt wird, bis der Haltearm 12 unter der Oberkante 27 der Lagerschiene 4 zu liegen kommt. Dieser Vorgang wiederholt sich, bis sämtliche Bleche 5 von der Palette P entfernt sind.

## Patentansprüche

1. Horizontal angeordnete Lagerschiene (4) mit an horizontalen, quer zur Lagerschiene (4) angeordneten Bolzen (8) drehbar gelagerten Klinken (9, 9a, 9b) zum beabstandeten Festlegen von Lagergut (5), wie geformten Blechen, Kunststoffteilen od. dgl., in einem Lagergestell, wie beispielsweise Palette od. dgl., wobei beim Einbringen des Lagergutes in das Lagergestell eine sich in einer Bereitschaftsstellung befindlichen Klinke (9) in eine Arbeitsstellung verschwenkbar ist, während gleichzeitig eine benachbarte Klinke (9a) durch einen an der ersten Klinke (9) befindlichen Steuerarm (13) aus einer Ruhelage unterhalb einer Oberkante der Lagerschiene (4) in Bereitschaftsstellung geschwenkt wird,
dadurch gekennzeichnet,
daß der Klinke (9) ein Gewicht (18) zugeordnet ist, welches die Klinke (9) in Bereitschaftsstellung hält, während der Steuerarm (13) der Klinke (9) so an einer benachbarten Klinke (9a) anliegt, daß die erste Klinke (9) nicht durch das Gewicht (18) weiter in die Arbeitslage schwenkt.

2. Lagerschiene nach Anspruch 1, dadurch gekennzeichnet, daß das Gewicht (18) an einer Steuerklinke (16) angeordnet ist, welche neben der Klinke (9) bevorzugt am gleichen Bolzen (8) ebenfalls drehbar lagert.

3. Lagerschiene nach Anspruch 1 oder 2, dadurch gekennzeichnet, daß die Klinke (9) aus einem Haltearm (12) und einem Steuerarm (13) besteht, welche etwa rechtwinklig zueinander angeordnet sind.

4. Lagerschiene nach einem der Ansprüche 1 bis 3, dadurch gekennzeichnet, daß von der Klinke (9), insbesondere von dem Steuerarm (13) ein Stift (15) abragt, welcher zwischen zwei Zinken (25 und 26) der Steuerklinke (16) eingreift.

5. Lagerschiene nach wenigstens einem der Ansprüche 2 bis 4, dadurch gekennzeichnet, daß von der Steuerklinke (16) ein Zinken (23) abragt, der in Ruhelage der Klinke am nächstfolgenden Bolzen (8a) anschlägt.

6. Lagerschiene nach Anspruch 4, dadurch gekennzeichnet, daß das Gewicht (18) oberhalb des Bolzens (8) angeordnet ist, wobei eine Verbindungslinie (24) zwischen einem Mittelpunkt (21) des Gewichtes (18) und der Mittelachse (22) des Bolzens mit einer Längsachse (A) des Zinkens (23) einen spitzen Winkel (v) einschließt.

7. Lagerschiene nach Anspruch 6, dadurch gekennzeichnet, daß der Stift (15) beim Drehen der Klinke (9) in Richtung (a) um den Bolzen (8) zuerst einen Raum zwischen den beiden Zinken (25, 26) durchfährt, sodann an dem Zinken (25) anschlägt und nun die Steuerklinke (16) mitdreht, bis das Gewicht (18) seinen Scheitelpunkt über dem Bolzen (8) überschreitet.

8. Lagerschiene nach Anspruch 7, dadurch gekennzeichnet, daß die Drehbewegung der Steuerklinke (16) nach Überschreiten des Scheitelpunktes selbsttätig weiterläuft, wobei sich der Zinken (25) vom Stift (15) löst, bis der Zinken (26) am Stift (15) anschlägt.

9. Lagerschiene nach wenigstens einem der Ansprüche 4 bis 8, dadurch gekennzeichnet, daß der Steuerarm (13) in Bereitschaftsstellung an den Stift der nachfolgenden Klinke (9a) anschlägt und bei einer Drehung in die Arbeitsstellung über diesen Stift die nachfolgende Klinke (9a) in Bereitschaftsstellung versetzt.

10. Lagerschiene nach Anspruch 9, dadurch gekennzeichnet, daß der Stift durch den Stift (15a) gebildet ist, welcher den Steuerarm (13) durchdringt und beidseits überragt.

11. Lagerschiene nach wenigstens einem der Ansprüche 3 bis 10, dadurch gekennzeichnet, daß der Steuerarm (13) in Arbeitsstellung der Klinke (9) von unten her an den nachfolgenden Bolzen (8a) anschlägt.

12. Lagerschiene nach wenigstens einem der Ansprüche 1 bis 11, dadurch gekennzeichnet, daß die nachfolgende Klinke (9a) eine Steuerkante (28a) ausbildet, an welche ein Stift (14) der sich in Arbeitsstellung befindlichen Klinke (9) anschlägt.

13. Lagerschiene nach wenigstens einem der Ansprüche 1 bis 12, dadurch gekennzeichnet, daß die Lagerschiene (4) aus zwei parallel zueinander verlaufenden Leisten (6,7) besteht, zwischen denen in gleichem Abstand die Bolzen (8) angeordnet sind.

14. Lagerschiene nach wenigstens einem der Ansprüche 1 bis 13, dadurch gekennzeichnet, daß die Klinken (9) an aufeinanderfolgenden Bolzen (8) seitlich versetzt zueinander angeordnet sind und aneinander vorbeigleiten.

15. Lagerschiene nach Anspruch 14, dadurch gekennzeichnet, daß die Steuerklinken (16) aufeinanderfolgende Klinken (9) jeweils andererseits der nachfolgenden Klinke (9a) angeordnet sind.

## Claims

1. Horizontally arranged storage rail (4) with pawls (9, 9a, 9b) mounted rotatably on horizontal studs (8) arranged transversely to the storage rail (4) for the spaced fixing of stored material (5) such as shaped sheets, plastics parts or the like in a storage frame, for example pallet or the like, wherein a pawl (9) located in a readiness position is pivotal into an operating position during the introduction of the storage material into the storage frame while an adjacent pawl (9a) is simultaneously pivoted by a control arm (13) located on the first pawl (9) from the rest position below an upper edge of the storage rail (4) into a readiness position, characterised in that the pawl (9) is allocated a weight (18) which keeps the pawl (9) in the readiness position while the control arm (13) of the pawl (9) rests on an adjacent pawl (9a) such that the first pawl (9) does not pivot on into the operating position owing to the weight (18).

2. Storage rail according to claim 1, characterised in that the weight (18) is arranged on a control pawl (16) which, in addition to the pawl (9), is preferably also rotatably mounted on the same stud (8).

3. Storage rail according to claim 1 or 2, characterised in that the pawl (9) consists of a holding arm (12) and a control arm (13) which are arranged substantially at right angles to one another.

4. Storage rail according to one of claims 1 to 3, characterised in that a pin (15) which engages between two prongs (25 and 26) of the control pawl (16) projects from the pawl (9), in particular from the control arm (13).

5. Storage rail according to at least one of claims 2 to 4, characterised in that a prong (23) which strikes the subsequent stud (8a) in the rest position of the pawl projects from the control pawl (16).

6. Storage rail according to claim 4, characterised in that the weight (18) is arranged above the stud (8), a connecting line (24) enclosing an acute angle (v) between a centre point (21) of the weight (18) and the centre line (22) of the stud with a longitudinal axis (A) of the prong (23).

7. Storage rail according to claim 6, characterised in that during the rotation of the pawl (9) in direction (a) round the stud (8), the pin (15) firstly travels through a space between the two prongs (25, 26), then strikes the prong (25) and now entrains the control pawl (16) until the weight (18) passes beyond its vertex above the stud (8).

8. Storage rail according to claim 7, characterised in that the rotational movement of the control pawl (16) automatically continues running after passing beyond the vertex, the prong (25) being detached from the pin (15) until the prong (26) strikes the pin (15).

9. Storage rail according to at least one of claims 4 to 8, characterised in that, in the readiness position, the control arm (13) strikes the pin of the subsequent pawl (9a) and, during a rotation into the operating position, sets the subsequent pawl (9a) into the readiness position via this pin.

10. Storage rail according to claim 9, characterised in that the pin is formed by the pin (15a) which penetrates the control space (13) and projects on both sides.

11. Storage rail according to at least one of claims 3 to 10, characterised in that the control arm (13) strikes the subsequent stud (8a) from below in the operating position of the pawl (9).

12. Storage rail according to at least one of claims 1 to 11, characterised in that the subsequent pawl (9a) forms a control edge (28a) against which a pin (14) of the pawl (9) located in the operating position strikes.

13. Storage rail according to at least one of claims 1 to 12, characterised in that the storage rail (4) consists of two strips (6, 7) which extend parallel to one another and between which the studs (8) are arranged equidistantly.

14. Storage rail according to at least one of claims 1 to 13, characterised in that the pawls (9) are laterally offset from one another on successive studs (8) and slide past one another.

15. Storage rail according to claim 14, characterised in that control pawls (16) of successive pawls (9) are respectively arranged on the other side of the subsequent pawl (9a).

## Revendications

1. Rail horizontal de stockage (4), comportant des pivots horizontaux, transversaux par rapport au rail de stockage, sur lesquels sont montés des cliquets (9, 9a, 9b) servant à maintenir, espacés des objets à stocker (5) tels que des tôles en forme, des éléments en matière plastique ou analogues, sur un berceau de stockage, par exemple une palette ou analogue ou l'introduction dans le berceau de l'objet à stocker fait basculer un cliquet (9) de la position d'attente à la position de travail tandis que simultanément un cliquet voisin (9a), sous l'action d'un bras de commande (13) porté par le premier cliquet (9), bascule pour passer de la position de repos, où il se trouve en dessous du bord supérieur du rail, en position d'attente , caractérisé en ce qu'au cliquet (9) est associé un poids (18) qui maintient ce cliquet en position d'attente, tandis que le bras de commande (13) du cliquet (9) se trouve en appui sur un cliquet voisin (9a) de manière à empêcher le cliquet (9) de basculer, sous l'action du poids (18), pour venir en position de travail.

2. Rail de stockage selon la revendication 1, caractérisé en ce que le poids (18) est monté sur un cliquet de commande (16) qui peut pivoter également, à côté du cliquet (9), de préférence sur le même pivot (8).

3. Rail de stockage selon la revendication 1 ou 2, caractérisé en ce que le cliquet (9) comporte deux bras sensiblement perpendiculaires, à savoir un bras de maintien (12) et un bras de commande (13).

4. Rail de stockage selon l'une des revendications 1 à 3, caractérisé en ce que le cliquet (9) , en particulier son bras de commande (13) porte une broche (15) débordant, entre deux dents (25 et 26) du cliquet de commande (16).

5. Rail de stockage selon au moins l'une des revendications 2 à 4, caractérisé en ce que le cliquet de commande (16) présente une dent dépassante (23) qui est en butée sur le pivot (8a) du cliquet voisin, lorsque le cliquet (16) est en position de repos.

6. Rail de stockage selon la revendication 4, caractérisé en ce que le poids (18) est situé au-dessus du pivot (8), une ligne (24) reliant le centre (21) du poids (18) et l'axe (22) du pivot faisant un angle aigu avec l'axe longitudinal (A) de la dent (23).

7. Rail de stockage selon la revendication 5, caractérisé en ce que la broche (15) par rotation du cliquet (9) selon la direction (a), autour du pivot (8), commence par parcourir l'intervalle séparant les deux dents (25, 26) pour venir en butée sur la dent (25) et entraîner alors le cliquet de commande (16), jusqu'à ce que le poids (18) dépasse son point haut du delà du pivot (8).

8. Rail de stockage selon la revendication 7, caractérisé en ce que la rotation du cliquet de commande (16), après dépassement du point haut se poursuit automatiquement jusqu'à la venue en butée de la dent (26) sur la broche (15) dont s'est séparée la dent (25).

9. Rail de stockage selon au moins l'une des revendications 4 à 8, caractérisé en ce le bras de commande (13), en position d'attente, est en butée sur une broche du cliquet suivant (9a), sa rotation pour passer en position de travail amenant, par l'action de cette broche, le cliquet suivant (9c) en position d'attente .

10. Rail de stockage selon la revendication 9, caractérisé en ce que la broche est la broche (15a) qui traverse le bras de commande (13) en dépassant des deux côtés .

11. Rail de stockage selon au moins l'une des revendications 3 à 10, caractérisé en ce que le bras de commande (13), en position de travail ,est en butée , par-dessous, sur le pivot (8a) suivant.

12. Rail de stockage selon au moins l'une des revendications 1 à 11, caractérisé en ce que le cliquet suivant (9a) présente un bord de commande (28a) sur lequel est en butée une broche (14) du cliquet (9) en position de travail.

13. Rail de guidage selon au moins l'une des revendications 1 à 12 , caractérisé en ce que le rail de guidage (4) est constitué de deux barres parallèles (6, 7) entre lesquelles sont montés, régulièrement espacés, les pivots (8).

14. Rail de guidage selon au moins l'une des revendications 1 à 13, caractérisé en ce que les cliquets (9) sont montés sur les pivots successifs (8) avec décalage latéral de manière à glisser les uns le long des autres.

15. Rail de guidage selon la revendication 14, caractérisé en ce que les cliquets de commande (16), accompagnant les cliquets (9) sont situés par rapport à chacun de ceux-ci du côté opposé au cliquet suivant (9a).
